Europäisches Patentamt

European Patent Office

Office européen des brevets

(19)

(11) Veröffentlichungsnummer: **0 060 564**
**B1**

(12) **EUROPÄISCHE PATENTSCHRIFT**

(45) Veröffentlichungstag der Patentschrift:
**15.01.86**

(21) Anmeldenummer: **82102158.1**

(22) Anmeldetag: **17.03.82**

(51) Int. Cl.⁴: **A 61 C 13/00,** A 61 K 6/08,
C 04 B 41/45

(54) Verfahren zur Erzeugung einer strukturvereinfachten Oberfläche an abnehmbarem Zahnersatz.

(30) Priorität: **18.03.81 DD 228404**

(43) Veröffentlichungstag der Anmeldung:
**22.09.82 Patentblatt 82/38**

(45) Bekanntmachung des Hinweises auf die Patenterteilung:
**15.01.86 Patentblatt 86/3**

(84) Benannte Vertragsstaaten:
**BE CH DE FR LI LU NL SE**

(56) Entgegenhaltungen:
**DE-A-1 803 172**
**DE-A-2 843 234**
**DE-A-2 906 299**
**DE-A-3 009 755**

(73) Patentinhaber: **Medizinische Akademie "Carl Gustav Carus", Fetscherstrasse 74, DDR- 8019 Dresden (DD)**

(72) Erfinder: **Wagner, Ina- Veronika, Dr., Hermann- Vogel- Strasse 16, DDR- 8054 Dresden (DD)**
Erfinder: **Schubert, Waldfried Karl Dr. rer. nat. Dipl.- Chem., Rote- Kreuz- Strasse 1, DDR- 8256 Weinböhla (DD)**
Erfinder: **Schaal, Wolfgang, Hans- Beimler- Strasse 10, DDR- 8252 Coswig (DD)**

(74) Vertreter: **Hansen, Bernd, Dr.rer.nat., Hoffmann, Eitle & Partner Patentanwälte Arabellastrasse 4, D-8000 München 81 (DE)**

EP 0 060 564 B1

## Beschreibung

Die vorliegende Erfindung betrifft ein Verfahren zur Erzeugung einer strukturvereinfachten Oberfläche bei einem Gipsmodell für die Herstellung von Zahnersatz durch Aufbringen eines gleichmäßigen glatten Überzugs.

Es ist bekannt, Zahnersatz mit Hilfe eines Gipsmodells herzustellen, das aus dem Abdruck des natürlichen Kiefer-Gaumenbereiches des Patienten gewonnen wird. Die exakte Wiedergabe aber Einzelheiten einerseits und die rauhe Oberfläche des Gipsmodells andererseits führen zu einer ebensolchen unruhigen Oberfläche des davon abgeformten Zahnersatzes. Außerdem ist Gips porös und führt zur Aufnahme von Wasser, Monomeren oder sonstigen Hilfsmitteln, mit denen im Verlauf der Präparation ein Kontakt stattfindet.

Es ist weiterhin bekannt, daß diese unerwünschte Beeinflussung des Gipsmodells durch Überzüge aus Lösungen filmbildender Stoffe unterdrückt werden kann. Dabei treten jedoch verschiedene Nachteile auf, wie zum Beispiel Ausbildung unterschiedlicher Filmdicken und Tropfenbildung, die zu scharfe Wiedergabe von Einzelheiten des Abdruckes vom Kiefer-Gaumenbereich einschließlich der Rauhheit des Gipses an dünnen Stellen und auch Blasenbildung bei Einwirkung von Wasser oder Monomeren.

Die Mängel der bekannten technischen Lösungen lassen sich auf mehrere Ursachen zurückführen. Das Fließverhalten der Lösungen für die Filmbildung führt nach dem Beschichten zu Schichtdickenänderungen, wobei die das Fließen verursachende Schubspannung durch Schwerkraft oder Oberflächenspannung erzeugt wird. Die Quellbeständigkeit gegen die während der Präparation einwirkenden Medien ist unzureichend. Die Haftfestigkeit der Überzüge auf dem Modell ist ungenügend. Es ist deshalb eine aufwendige Nachbearbeitung erforderlich. Im Falle einer ebenfalls möglichen Anwendung unbeschichteter Modelle entsteht ein Zahnersatz mit rauher Oberfläche der Prothesenbasis, wodurch eine Mikrobenbesiedlung gefördert wird.

Da die Prothesenbasis vor allem im Bereich des Alveolarkamms nur schwer einer mechanischen Politur zugänglich ist und durch eine mechanische Politur auch unbedingt zu vermeidende und unkontrollierbare Veränderungen der Oberflächenstruktur eintreten, ist eine Politur der Prothesenbasis nur über eine Vorbehandlung des Modells zu erreichen, die als Strukturvereinfachung bezeichnet wird und darin besteht, daß Grate und Fissuren, die in der Oberflächenstruktur der Schleimhaut vorhanden sind, über die Abformung auf das Modell reproduziert und ohne Nivellierung abgeschwächt werden. Eine derartige Strukturvereinfachung der Prothesenbasis zu erhalten, ist sowohl über das Abformmaterial als auch über das Modell möglich. Gegen die Methode der Strukturvereinfachung über die aus dem Munde entnommene Abformung spricht die Vielzahl der in der Stomatologie angewendeten unterschiedlichen Abformwerkstoffe. Durch eine Strukturvereinfachung erzielte Hochglanzpolitur der Prothesenbasis kann den mechanischirritativen und mikrobiellen Schädigungen des Prothesenlagergewebes durch das Behandlungsmittel vorgebeugt werden.

Aus der DE-A-2 908 299 ist ein Verfahren zur Herstellung von harten Filmen definierter Dicke auf zahnärztlichen Gipsmodellen bekannt, bei dem man das Gipsmodell in ein polymerisierbares Monomer oder eine Mischung solcher Monomere eintaucht. Dadurch soll bewirkt werden, daß ein im menschlichen Gebiß einzuzementierendes Gußobjekt, z.B. eine Krone, in einer solchen geometrischen Abmessung hergestellt wird, daß zwischen dem Zahnstumpf und der Innenwandung der Krone der notwendige Zementspalt verbleibt.

Aus der DE-A-1 803 172 ist weiterhin bekannt Härtungsmittel enthaltende Silikonkautschukmassen als Beschichtungsmittel zu verwenden, sowie auch als Zusätze, wobei die Kalthärtungseigenschaften und die kurze Härtungszeit von Bedeutung sind, z.B. in der Zahntechnik.

Aufgabe der Erfindung ist es, ein Verfahren zu schaffen, das die Erzeugung einer glatten und strukturvereinfachten Oberfläche auf einem Gipsmodell für die Herstellung von herausnehmbaren Zahnersatz durch Aufbringen eines gleichmäßigen Überzugs gestattet und eine zusätzliche mechanische Behandlung zur Verbesserung der Oberflächenstruktur unnötig macht.

Diese Aufgabe wird durch ein Verfahren zur Erzeugung einer strukturvereinfachten Oberfläche an abnehmbarem Zahnersatz unter Verwendung eines mit einem gleichmäßigen, glatten und strukturvereinfachenden, verarbeitungsbeständigen Überzug beschichteten Gipsmodells, bei dem der Überzug aus einer durch Thixotropierungsmittel und Lösungsmittelkonzentration im Fließverhalten eingestellten Lösung von Silikonkautschuk mit Vernetzer hergestellt wird, gelöst.

Gemäß einer vorteilhaften Ausführungsform benutzt man als Thixotropierungsmittel die bereits im Silikonkautschuk enthaltenen Bestandteile.

Nach Verdunsten des Lösungsmittels und Umsetzung des Vernetzers bildet sich ein Überzug mit den geforderten Eigenschaften, wobei diese Phase des Verfahrens zweckmäßigerweise durch Temperaturerhöhung beschleunigt werden kann. Um die Wirkung des Thixotropierungsmittels voll zu entfalten, ist eine gute, aber schonende Verteilung in der Lösung erforderlich, was zum Beispiel durch Benetzung mit einem Teil des Lösungsmittels vor der Zugabe erfolgen kann.

Die Lösung des Silikonkautschuks mit dem Thixotropierungsmittel kann im dichtschließenden Behälter auf Vorrat hergestellt werden. Erst unmittelbar vor Anwendung wird der Vernetzer zu einem dem unmittelbaren Bedarf angepaßten Ansatz zudosiert und untergerührt. Das Aufbringen des Überzuges auf das Gipsmodell erfolgt durch Bastreichen, Sprühen oder durch Tauchen, wobei im letzteren Fall die Einhaltung der Schichtdicke am besten möglich ist.

**Ausführungsbeispiele**

1. 100 Teile kaltvulkanisierende Silikonkautschukpaste (Typ NG 3150 von VEB Chemiewerk Nünchritz)

80 Teile Ethylacetat

1 Teil feindisperse Kieselsäure

werden innig vermischt, wobei 20 Teile Ethylacetat mit der Kieselsäure getrennt vor Zugabe vorgemischt werden. Unmittelbar vor Benutzung werden 4 Teile Vernetzer 11 untergerührt, die Gipsmodelle mit der Lösung bestrichen und 30 Minuten lang luftgetrocknet.

2. 100 Teile Silikonkautschukpaste NG 3130

75 Teile Ethylacetat

werden vermischt, 4 Teile Vernetzer 11 untergerührt und die Gipsmodelle in der Lösung getaucht. Nach Lufttrocknung von 24 Std. können die Modelle weiterverwendet werden.

**Patentansprüche**

1. Verfahren zur Erzeugung einer strukturvereinfachten Oberfläche an abnehmbarem Zahnersatz unter Verwendung eines mit einem gleichmäßigen, glatten und strukturvereinfachenden, verarbeitungsbeständigen Überzug beschichteten Gipsmodells, dadurch gekennzeichnet, daß der Überzug aus einer durch Thixotropierungsmittel und Lösungsmittelkonzentration im Fließverhalten eingestellten Lösung von Silikonkautschuk mit Vernetzer hergestellt wird.

2. Verfahren nach Anspruch 1, dadurch gekennzeichnet, daß als Thixotropierungsmittel die bereits im Silikonkautschuk enthaltenen Bestandteile benutzt werden.

**Claims**

1. Method for producing a structurally simplified surface on a removable denture with use of a plaster model coated with a uniform flat and structurallysimplified treatment resistant coating, characterized in that the coating is manufactured from a solution of silicone rubber with hardener placed in the liquid condition by an agent for producing thixotropic conditions and solvent concentration.

2. Method according to claim 1 characterized in that the component parts already contained in the silicone rubber are used as agent for producing thixotropic conditions.

**Revendications**

1. Procédé pour l'obtention d'une surface à structure simplifiée sur des dents artificielles amovibles comportant l'emploi d'un modele en plâtre couvert d'un enduit lisse, régulier et à structure simplifiée résistante au façonnage, caractérisé en ce que la couche est réalisée à partir d'une solution de caoutchouc au silicone avec un agent de réticulation ajustée pour son aptitude à l'écoulement à l'aide d'un moyen à effet thixotropique et de la concentration d'un solvant.

2. Procédé selon la revendication 1, caractérisé en ce qu'on utilise comme moyen à effet thixotropique la partie constituante déjà contenue dans le caoutchouc au silicone.